(19) Europäisches Patentamt
European Patent Office
Office européen des brevets

(11) **EP 1 052 488 B1**

(12) **FASCICULE DE BREVET EUROPEEN**

(45) Date de publication et mention
de la délivrance du brevet:
**02.01.2008 Bulletin 2008/01**

(51) Int Cl.:
***G01L 3/00*** *(2006.01)*  ***G01M 15/00*** *(2006.01)*

(21) Numéro de dépôt: **00401231.6**

(22) Date de dépôt: **05.05.2000**

(54) **Procédé et dispositif de mesure du couple d'un moteur à combustion interne**

Verfahren und Vorrichtung zur Messung des Drehmomentes einer Brennkraftmaschine

Procedure and device for measuring the torque of an internal combustion engine

(84) Etats contractants désignés:
**BE DE**

(30) Priorité: **10.05.1999 FR 9905917**

(43) Date de publication de la demande:
**15.11.2000 Bulletin 2000/46**

(73) Titulaire: **RENAULT S.A.S.**
**92100 Boulogne Billancourt (FR)**

(72) Inventeurs:
• **Abida, Jamil**
**92500 Rueil Malmaison (FR)**
• **Wehrli, Eric**
**92260 Fontenay aux Roses (FR)**

(56) Documents cités:
**EP-A- 0 532 419**

**Description**

L'invention concerne un procédé et un dispositif de mesure du couple d'un moteur thermique à combustion interne, de type Diesel ou à essence.

Le développement de nouveaux moteurs passe par une amélioration de leur fonctionnement et par des mesures d'antipollution plus sévères, ce qui nécessite de nouveaux capteurs de variables ou de grandeurs internes au moteur, caractéristiques du fonctionnement.

En particulier, un capteur de couple permet d'estimer le couple produit par le moteur, constituant la grandeur de sortie d'un système dynamique complexe. Le moteur exerce sur le système constitué par le vilebrequin, le volant d'inertie qui lui est solidaire et les masses alternatives, un couple gaz moyen à chaque combustion du mélange gazeux dans chacun des cylindres. Un tel capteur de couple est destiné à une meilleure connaissance du fonctionnement dans le but d'une stratégie de contrôle du moteur d'une part, et à diagnostiquer des défauts de fonctionnement, tels que des ratés de combustion dans le but d'adaptation de stratégie de dépollution.

Actuellement, il existe des procédés d'estimation du couple moteur et de diagnostic de raté de combustion utilisant des mesures de vitesse instantanée obtenue à partir d'un capteur placé sur le volant d'inertie du moteur et généralement traitées dans le domaine fréquentiel.

Le brevet français, déposé au nom de RENAULT sous le numéro FR 91 11273, propose un procédé d'estimation du couple fourni par un moteur à essence à partir de mesures de la vitesse instantanée de rotation du vilebrequin, donnée sous forme de durées de dent mesurées par un capteur magnétique placé en face d'une couronne dentée solidaire du volant moteur. Par transformée de Fourier, le procédé donne une expression de l'harmonique d'ordre 4 de la vitesse en fonction des durées dent sur un demi-tour de vilebrequin, et la valeur de l'harmonique d'ordre 4 du couple gaz est ensuite déduite de l'inversion du modèle dynamique du système moteur-vilebrequin.

Le capteur de couple est basé sur la constance du rapport entre le couple gaz moyen $PMI_m$ et la projection de son harmonique 4 rapportée à une position de référence de phase constituée par la première dent, après le point mort haut, $PMI_4*cos\phi_4$, pour la boucle positive du cycle, sur la plage de régime moteur comprise entre 2000 et 4000 tours/minute, et avec une correction en fonction de la richesse. Le capteur est limité aux moteurs à essence et ne peut être appliqué aux moteurs Diesel car la constance du rapport entre la valeur moyenne et l'harmonique d'ordre 4 du couple n'est plus assurée avec une combustion au gazole.

En effet, lors d'un raté de combustion, la combustion du gazole ne se fait pas dans un ou plusieurs des cylindres du moteur, ce qui entraîne une chute du couple moyen pouvant être détectée par le capteur de couple. Il est alors possible d'envisager une stratégie de dépollution relative à l'échappement des gaz non brûlés, ainsi qu'un procédé de remise en état ou de réglage des injecteurs et soupapes du cylindre défectueux. Le capteur de couple peut être aussi utilisé lors d'essais effectués sur banc moteur, afin de connaître le couple aux différents points de fonctionnement auxquels ont lieu les essais. Il permet de plus de commander chaque injecteur par estimation du couple tous les quarts de cycle moteur, en particulier en régulation du régime de ralenti.

Plus généralement, ce capteur de couple peut servir de bouclage sur le débit de gazole injecté dans les cylindres.

Le but de l'invention est de délivrer une estimation du couple moyen sur un cycle moteur à partir d'un capteur de vitesse instantanée et d'un algorithme intégrant la dynamique du moteur et un modèle de combustion. L'invention transforme le signal de vitesse du capteur dans l'espace fréquentiel et calcule les harmoniques de couple à partir des harmoniques de vitesse.

Pour cela, l'objet de l'invention est un dispositif de mesure du couple gaz moyen $C_{gaz}$ produit par chaque combustion du mélange air-carburant dans un moteur thermique à quatre temps et p cylindres, relié à un capteur magnétique de vitesse instantanée, monté fixement en face du volant d'inertie du moteur, lui-même solidaire d'une couronne dentée, à N dents, qui délivre un signal alternatif de fréquence proportionnelle à la vitesse de défilement des dents de la couronne, c'est-à-dire proportionnelle à la vitesse instantanée du volant, caractérisé en ce qu'il est composé de :

- premiers moyens réalisant une transformée de Fourier FFT de la vitesse angulaire instantanée $\omega(t)$ du volant moteur pour délivrer ses harmoniques ($\Omega_{np}$) de rang np sur un cycle moteur; un modèle dynamique du système moteur-vilebrequin avec torsion ;
- relié à ces premiers moyens, qui permet de calculer les harmoniques ($C_{gaz,np}$) d'ordre np du couple moyen gaz en fonction des harmoniques ($\Omega_{np}$) de la vitesse angulaire instantanée ;
- des seconds moyens réalisant la corrélation entre la valeur moyenne du couple gaz ($C_{gaz,0}$) et ses harmoniques ($C_{gaz,np}$).

Un second objet de l'invention est un procédé de mesure du couple gaz moyen mis en oeuvre par le dispositif, dont la première étape consiste à calculer la vitesse angulaire instantanée $\omega(t)$ du volant moteur à partir d'une mesure de durée dent (dt) de la couronne dentée associée au volant d'inertie, qu'il inverse et multiplie par l'angle correspondant au passage de la dent, caractérisé en ce qu'il comporte les étapes suivantes :

- calcul de la transformée de Fourier FFT de cette vitesse angulaire $\omega(t)$ pour en obtenir ses $N/p$ harmoniques ($\Omega_{np}$) d'ordre np, sur un cycle moteur, soit deux tours de vilebrequin, l'harmonique fondamentale pour un moteur à p cylindres étant l'harmonique ($\Omega_p$) d'ordre p;
- calcul du couple d'inertie ($C_{vil}$) du vilebrequin en fonction de la vitesse du volant moteur à partir du modèle dynamique du système moteur-vilebrequin qui intègre la torsion, de telle sorte que chaque harmonique ($C_{vil,pn}$) du couple d'inertie du vilebrequin s'exprime en fonction de l'harmonique ($\Omega_{pn}$) de la vitesse de rotation du vilebrequin :

$$C_{vil,np} = \{ p \ / \ \sum_{j=1}^{j=p} \alpha_j(s) \} \ * \ \Omega_{np}$$

j étant un entier compris entre 1 et p, et les termes $\alpha_j(s)$ étant relatifs au volant moteur et aux manetons de la matrice inverse de la matrice inertie-amortissement-raideur ;
- calcul des harmoniques ($C_{gaz,np}$) du couple gaz égal à la somme du couple du vilebrequin entraîné et du couple des masses alternatives selon la relation dynamique du vilebrequin dans le domaine fréquentiel: $C_{gaz,np} = C_{vil,np} + C_{ma,np}$
les harmoniques $C_{ma,np}$ du couple des masses alternatives étant nulles quand $n \neq 1$, de sorte que :

$$C_{gaz,np} = C_{vil,np} = \{ p \ / \ \sum_{j=1}^{j=p} \alpha_j(s) \} * \ \Omega_{np} \ ;$$

- corrélation entre le couple moyen gaz ($C_{gaz,o}$) et les harmoniques importantes du signal :

$$(V_{cyl}/4\pi) \ * \ PMI_{np} \ \cos\Phi_{np}.$$

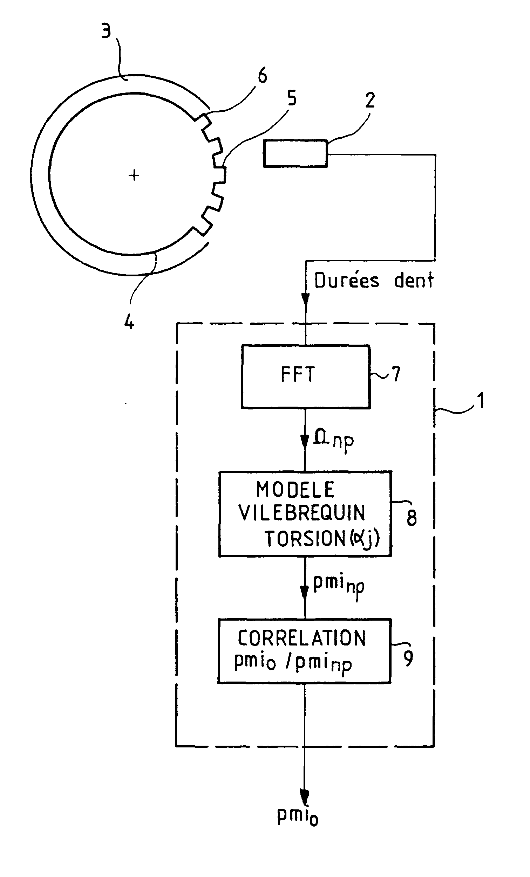

D'autres caractéristiques et avantages de l'invention apparaîtront à la lecture de la description d'un mode de réalisation particulier, illustrée par la figure unique qui est un schéma des différents éléments constitutifs d'un dispositif de mesure du couple selon l'invention.

Le dispositif 1 de mesure du couple gaz moyen $C_{gaz}$ produit par chaque combustion du mélange air-carburant dans un moteur thermique à quatre temps, selon l'invention, est représenté schématiquement sur la figure unique. Il est relié à un capteur 2 magnétique fixe monté en face du volant d'inertie 3 du moteur, lui-même solidaire d'une couronne dentée 4, à N dents, qui délivre un top à chaque passage d'un front montant 5 d'une dent 6, afin d'obtenir une durée dent dt avec une horloge. Le signal alternatif délivré par le capteur est de fréquence proportionnelle à la vitesse de défilement des dents de la couronne, c'est-à-dire proportionnelle à la vitesse instantanée du volant.

Un moteur à combustion interne, Diesel ou à essence comprenant p cylindres, p étant un entier au moins égal à 4, fonctionne suivant un cycle thermodynamique à 4 temps : l'admission du mélange des gaz, l'air ou les EGR - Exhaust Gas Recirculation - dans certains cas, leur compression, la combustion du carburant injecté et de l'oxygène contenu dans ces gaz et la détente des gaz, et enfin l'échappement. Le moteur comprend aussi un vilebrequin qui relie les points d'application des couples exercés par les pistons des cylindres au volant d'inertie du moteur, dans un mouvement rotatif.

Le dispositif 1 de mesure du couple gaz, relié au capteur magnétique 2, est composé tout d'abord de moyens 7 réalisant une transformée de Fourier FFT de la vitesse angulaire instantanée $\omega(t)$ du volant moteur, qui délivre les harmoniques $\Omega_n$ de rang n. Ces moyens 7 sont ensuite reliés à un modèle dynamique 8 du vilebrequin avec torsion, qui permet de calculer l'harmonique pmip d'ordre p de la pression moyenne indiquée à partir de laquelle des moyens 9 vont réaliser la corrélation entre cette harmonique pmip et la valeur moyenne $pmi_0$ de la pression moyenne indiquée du couple.

Ainsi, le procédé de mesure du couple, mis en oeuvre par ce dispositif précédemment décrit, réalise les différentes étapes suivantes.

Il calcule la vitesse angulaire instantanée $\omega(t)$ du volant moteur à partir d'une mesure de durée dent dt de la couronne dentée associée au volant d'inertie, qu'il inverse et multiplie par l'angle correspondant au passage de la dent. Les moyens 7 effectuent une transformée de Fourier FFT de cette vitesse angulaire $\omega(t)$ pour obtenir les harmoniques $\Omega_{np}$ de cette vitesse, au nombre de N/p. Sur un cycle moteur, soit deux tours de vilebrequin, l'harmonique fondamentale pour un moteur à p cylindres est l'harmonique d'ordre p.

D'après le modèle dynamique du vilebrequin, le couple $C_{vil}$ du vilebrequin entraîné ajouté à celui $C_{ma}$ des masses alternatives, telles que la bielle et la manivelle, est égal au couple gaz $C_{gaz}$ auquel on retranche le couple dû aux frottements $C_f$ et le couple résistant $C_0$ ramené par l'embrayage, comme l'exprime l'équation $E_1$ :

$$C_{vil} + C_{ma} = C_{gaz} - C_f - C_0 \qquad (E_1)$$
$$= \{(V_{cyl}/4\pi) * (pmi - pmf)\} - C_0$$

dans laquelle :

$V_{cyl}$ = cylindrée totale du moteur
pmi = pression moyenne indiquée
pmf = pression moyenne due aux frottements
$C_{gaz}$ = $(V_{cyl}/4\pi)$ *pmi
$C_f$ = $(V_{cyl}/4\pi)$*pmf.

Le couple dû aux frottements et le couple résistant sont supposés négligeables ou constants.

Le couple des masses alternatives $C_{ma}$ n'a de composante que sur l'harmonique p, soit dans le cas d'un moteur à p=4 cylindres :

$$C_{ma} = mR^2/ 2\omega^2 * sin2\theta \qquad (E_2)$$

$\theta$ étant l'angle de rotation du vilebrequin et $\omega = d\theta/dt$ sa vitesse de rotation.

Dans le cas d'un moteur à p=6 cylindres :

$$C_{ma} = 3mR^2/(4\lambda)*\omega^2 * sin3\theta$$

où m est la masse alternative, R est la longueur de la manivelle, $\lambda$ est le rapport entre la bielle et la manivelle.

Dans une première approximation où la torsion est négligée, le couple d'inertie du vilebrequin est écrit selon l'équation $E_3$ :

$$C_{vil} = J*d\omega/dt \qquad (E_3)$$

où J est l'inertie du vilebrequin,
ce qui est justifié pour les harmoniques à des fréquences faibles, en dessous des résonances de torsion.

Le modèle dynamique du système moteur-vilebrequin selon l'invention intègre la torsion existant en raison de la masse et de la raideur du vilebrequin, par calcul de structure sous forme d'un modèle à éléments finis à $n_{EF}$ degrés de liberté. Ces degrés de liberté sont les déplacements angulaires des différents éléments du vilebrequin, soit le volant moteur, les paliers, tourillons, bras, poulies et manetons qui sont les points d'application des bielles.

Pour cela, le modèle du vilebrequin s'écrit, dans le domaine fréquentiel, après inversion de la matrice intertie-amortissement-raideur, sous la forme de l'équation $E_4$ :

$$[d\theta/dt] = [Js + B + K/s]^{-1} * [C] \qquad (E_4)$$

dans laquelle :

$[d\theta/dt]$ et $[C]$ sont des vecteurs à $n_{EF}$ composantes représentant les déplacements et les efforts des différents éléments du vilebrequin ;

$K/s$ représente la torsion et B est un terme d'amortissement modérant la torsion ;

$s = i2\pi f$ (f = fréquence de vibration du vilebrequin et $i^2 = -1$).

En considérant les $n_{EF}$ degrés de liberté du modèle, seuls les couples $C_j$ exercés sur les manetons par chacun des p cylindres sont non nuls : $C_j = (1/p)*C_{vil}$, de sorte que l'on obtient la vitesse de rotation du volant:

$$d\theta_{vol}/dt = \sum_{j=1}^{j=p} \alpha_j(s)*C_j \qquad (E_5)$$

les coefficients $\alpha_j(s)$ étant ceux de la ligne relative au volant moteur, dans la matrice inverse de la matrice inertie-amortissement-raideur, et correspondant aux manetons où s'appliquent les comptes.

D'après le procédé, en première approximation, on considère que les couples $C_j$, j étant un entier compris entre 1 et p, exercés par les cylindres sont, en fonctionnement normal, tous égaux à un déphasage près, égal à T/p sur un cycle moteur, T étant la durée du cycle moteur, de telle sorte que l'on obtient une relation entre vitesse de rotation $\omega$ et couple total du vilebrequin $C_{vil}$.

Etant donné que pour les harmoniques $C_{j,np}$ des couples multiples de p, le déphasage est multiple de $2\pi$, donc nul, les harmoniques $\Omega_{pn}$, d'ordres multiples de p, de la vitesse de rotation $\omega$ s'expriment en fonction des harmoniques $C_{vil,pn}$ du couple d'inertie du vilebrequin par l'équation $E_6$ :

$$(d\theta/dt)_{np} = \Omega_{np} = \left\{ \sum_{j=1}^{j=p} \alpha_j(s) \right\} *C_{j,np} \qquad (E_6)$$

avec

$$C_{j,np} = 1/p * C_{vil,np}$$

$$s = i*\omega_0*np/2$$

$\omega_0$ : valeur moyenne de la vitesse $\omega$

Ainsi

$$C_{vil,np} = \{p \ / \ \sum_{j=1}^{j=p} \alpha_j(s)\} * \ \Omega_{np}. \qquad (E_7)$$

Le procédé calcule ensuite les harmoniques $C_{gaz,np}$ du couple gaz à partir de la relation dynamique du vilebrequin ($E_1$) dans le domaine fréquentiel en ne gardant que les harmoniques $pmi_{np}$ multiples de p, soit :

$$C_{gaz,np} = V_{cyl}/4\pi \ * \ pmi_{np} = C_{vil,np} + C_{ma,np} \qquad (E'_1)$$

sachant de plus que le couple gaz est aussi égal à :

$$C_{gaz} = C_{gaz,0} + \sum C_{gaz,np}$$

$$C_{gaz} = (V_{cyl}/4\pi) \ * \ \{pmi_0 + \sum pmi_{pn}*e^{i0np/2}\},$$

$pmi_0$ étant la valeur moyenne de pmi pour n=0 et $\sum pmi_{pn}*e^{i0np/2}$ ses harmoniques,
et pour la vitesse angulaire mesurée $\omega$ est:

$$\omega = \omega_0 + \sum \Omega_{pn} \ * \ e^{i0np/2}$$

la valeur de chaque harmonique $\Omega_{np}$ étant très inférieure à la valeur moyenne $\omega_0$.

D'une part, les harmoniques $C_{vil,np}$ du couple du vilebrequin ont été calculées en ($E_7$) et d'autre part, les harmoniques $C_{ma,pn}$ du couple des masses alternatives, multiples de p, sont nulles quand n est différent de 1, seule $C_{ma,p}$ est non nulle.

Dans le cas d'un moteur essence ou Diesel à 4 cylindres par exemple, pour n = 1, l'harmonique $C_{ma,4}$ d'ordre 4 est égal à :

$$C_{ma,4} = - \ i\omega_0^2 \ * \ mR^2/4.$$

Ainsi, pour n ≠ 1 :

$$C_{gaz,np} = C_{vil,np} = \{p \ / \ \sum_{j=1}^{j=p} \alpha_j(s)\} * \ \Omega_{np}$$

Le procédé a évalué les harmoniques $C_{gaz,np}$ d'ordres multiples de p du couple gaz $C_{gaz}$, à partir desquels il doit faire la corrélation avec le couple moyen gaz :

$$C_{gaz,0} = (V_{cyl}/4\pi) * pmi_0.$$

Pour une couronne dentée à N dents, d'indice m compris entre 0 et N-1, et faisant un angle $\theta_m$ avec une position de référence, la pression moyenne indiquée pmi(m) correspondant au couple exercé au passage de la dent m s'exprime, à partir de la formule de la transformée de Fourier selon l'équation $E_8$ :

$$pmi(m) = \sum_{n=0}^{N-1} pmi_{np} * exp(i2\pi npm/N) \qquad (E_8)$$

n étant le rang de l'harmonique.

En prenant la première dent de la couronne, d'indice m = 0 et d'angle $\theta_0$, après le Point Mort Bas, telle que pmi(0) = 0, l'expression $E_8$ devient :

$$pmi(0) = pmi_0 + \sum_{n=1}^{(N-1)/2} pmi_{np} + \sum_{(N-1)/2}^{N-1} pmi_{np}$$

$$pmi_0 = pmi(\theta_0) - 2\sum_{n=1}^{(N-1)/2} PMI_{np} * \cos\phi_{np} \qquad (E_9)$$

avec

$$pmi_{np} = PMI_n(\cos\phi_{np} + i\sin\phi_{np})$$

$PMI_{np}$ étant l'amplitude et $\phi_{np}$ étant la phase de l'harmonique $pmi_{np}$ d'ordre np.

L'expression ($E_9$) traduit la corrélation importante entre le couple moyen $C_{gaz},0 = (V_{cyl}/4\pi)*pmi_0$ et les harmoniques importantes $(V_{cyl}/4\pi) * PMI_n * \cos\phi_n$ du signal, c'est-à-dire les premières, soit l'harmonique 4 pour un moteur à essence à quatre cylindres.

Pour un moteur Diesel à quatre cylindres, on constate, par l'observation empirique des signaux de pression obtenus, à l'harmonique d'ordre 2p=8, une relation $E_{10}$ linéaire d'évaluation du couple moyen :

$$(V_{cyl}/4\pi) * pmi_0 = a(V_{cyl}/4\pi) * (-2\ PMI_8 * \cos\phi_8) + b$$

où a et b sont des coefficients obtenus par cartographie en fonction au premier ordre de l'avance à l'injection et éventuellement du régime moteur, cette cartographie étant le résultat d'une calibration sur un type de moteur.

A partir de l'observation des essais, il peut arriver qu'une phase $\phi_8$ soit voisine de 90°, ce qui entraîne que la composante $PMI_8 * \cos\phi_8$ est voisine de 0. Aussi, le procédé prévoit la projection sur l'axe des sinus permettant d'obtenir une relation analogue d'évaluation du couple moyen à partir de l'expression $-2PMI_8*\sin\phi_8$, qui est fonction du régime et de l'avance.

Pour un moteur Diesel à p cylindres, le procédé établit une corrélation entre le couple gaz moyen $C_{gaz,0}$ et son harmonique $C_{gaz,2p}$:

$$(V_{cyl}/4\pi) * pmi_0 = a (V_{cyl}/4\pi) * (-2 PMI_{2p}*\cos\phi_{2p}) + b$$

Pour un moteur à 4 cylindres, on considère l'harmonique 8, et pour un moteur à 6 cylindres on considère l'harmonique 12 par exemple.

L'invention permet une estimation du couple moyen sur un cycle moteur, par transformation du signal de vitesse du capteur dans l'espace fréquentiel, et calcul des harmoniques du couple à partir de celles de la vitesse. L'introduction de la torsion dans le modèle dynamique du système moteur-vilebrequin est essentielle car elle influe sur les harmoniques de rang supérieur à l'harmonique 4.

## Revendications

1. Dispositif de mesure du couple gaz moyen $C_{gaz}$ produit par chaque combustion du mélange air-carburant dans un moteur thermique à quatre temps et p cylindres, relié à un capteur magnétique de vitesse instantanée, monté fixement en face du volant d'inertie du moteur, lui-même solidaire d'une couronne dentée, à N dents, qui délivre un signal alternatif de fréquence proportionnelle à la vitesse de défilement des dents de la couronne, c'est-à-dire proportionnelle à la vitesse instantanée du volant, **caractérisé en ce qu'**il est composé de :

   - premiers moyens (7) réalisant une transformée de Fourier FFT de la vitesse angulaire instantanée $\omega(t)$ du volant moteur pour délivrer ses harmoniques $(\Omega_{np})$ de rang np sur un cycle moteur;
   - un modèle dynamique (8) du système moteur-vilebrequin avec torsion, relié à ces premiers moyens (7), qui permet de calculer les harmoniques $(C_{gaz,np})$ d'ordre np du couple moyen gaz en fonction des harmoniques $(\Omega_{np})$ de la vitesse angulaire instantanée ;
   - des seconds moyens (9) réalisant la corrélation entre la valeur moyenne du couple gaz $(C_{gaz,0})$ et ses harmoniques $(C_{gaz,np})$.

2. Dispositif de mesure du couple gaz moyen selon la revendication 1, **caractérisé en ce que** le modèle dynamique du système moteur-vilebrequin intègre la torsion existant en raison de la masse et de la raideur du vilebrequin, par calcul de structure sous forme d'un modèle à éléments finis à $n_{EF}$ degrés de liberté, correspondant aux déplacements angulaires et aux efforts des différents éléments du vilebrequin, soit le volant moteur, les paliers, tourillons, bras, poulies et manetons qui sont les points d'application des bielles, ledit modèle du vilebrequin s'écrivant, dans le domaine fréquentiel, après inversion de la matrice inertie-amortissement-raideur, sous la forme :

$$[d\theta/dt] = [Js + B + K/s]^{-1} * [C]$$

   $[d\theta/dt]$ étant un vecteur à $n_{EF}$ composantes représentant la vitesse de rotation des éléments du vilebrequin ;
   $[C]$ étant un vecteur à $n_{EF}$ composantes représentant les couples appliqués sur le vilebrequin
   K/s représentant la torsion ;
   J représentant l'inertie du vilebrequin ;
   B étant un terme d'amortissement modérant la torsion ;
   $s = i2\pi f$ (f = fréquence de vibration du vilebrequin),
   de telle sorte que chaque harmonique $(C_{vil,pn})$ du couple d'inertie du vilebrequin s'exprime en fonction de l'harmonique $(\Omega_{pn})$ de la vitesse de rotation du vilebrequin :

$$C_{vil,np} = \{p\ /\ \sum_{j=1}^{j=p} \alpha_j(s)\} * \Omega_{np}$$

**3.** Procédé de mesure du couple gaz moyen mis en oeuvre par le dispositif selon les revendications 1 et 2, dont la première étape consiste à calculer la vitesse angulaire instantanée $\omega(t)$ du volant moteur à partir d'une mesure de durée dent (dt) de la couronne dentée associée au volant d'inertie, qu'il inverse et multiplie par l'angle correspondant au passage de la dent, **caractérisé en ce qu'**il comporte les étapes suivantes :

- calcul de la transformée de Fourier FFT de cette vitesse angulaire $\omega(t)$ pour en obtenir ses N/p harmoniques ($\Omega_{np}$) d'ordre np, sur un cycle moteur, soit deux tours de vilebrequin, l'harmonique fondamentale pour un moteur à p cylindres étant l'harmonique ($\Omega_p$) d'ordre p;
- calcul du couple d'inertie ($C_{vil}$) du vilebrequin en fonction de la vitesse du volant moteur à partir du modèle dynamique du système moteur-vilebrequin qui intègre la torsion, de telle sorte que chaque harmonique ($C_{vil,pn}$) du couple d'inertie du vilebrequin s'exprime en fonction de l'harmonique ($\Omega_{pn}$) de la vitesse de rotation du vilebrequin :

$$C_{vil,np} = \{p\ /\ \sum_{j=1}^{j=p} \alpha_j(s)\}\ *\ \Omega_{np}$$

j étant un entier compris entre 1 et p,
$\alpha_j(s)$ étant calculés à partir de la matrice inertie-amortissement-raideur ;
- calcul des harmoniques ($C_{gaz,np}$) du couple gaz égal à la somme du couple du vilebrequin entraîné et du couple des masses alternatives selon la relation dynamique du vilebrequin dans le domaine fréquentiel : $C_{gaz,np}$ = $C_{vil,\,np}$ + $C_{ma,np}$ les harmoniques $C_{ma,np}$ du couple des masses alternatives étant nulles quand $n \neq 1$, de sorte que :

$$C_{gaz,np} = C_{vil,np} = \{p\ /\ \sum_{j=1}^{j=p} \alpha_j(s)\} * \Omega_{np}\ ;$$

- corrélation entre le couple moyen gaz ($C_{gaz,}0$) et les harmoniques importantes du signal :

$$(V_{cyl}/4\pi)\ *\ PMI_{np}\ \cos\Phi_{np}.$$

**4.** Procédé de mesure du couple gaz moyen selon la revendication 3, **caractérisé en ce que** , dans le cas d'un moteur Diesel à p cylindres, il établit une corrélation entre le couple gaz moyen ($C_{gaz,}0$) et son harmonique ($C_{gaz,2p}$) selon une relation linéaire :

$$(V_{cyl}/4\pi)\ *\ pmi_0 = a\ (V_{cyl}/4\pi)\ *\ (-2\ PMI_{2p}*\cos\phi_{2p})\ +\ b$$

où a et b sont des coefficients obtenus par cartographie en fonction au premier ordre de l'avance à l'allumage et éventuellement du régime moteur, cette cartographie étant le résultat d'une calibration sur un type de moteur.

**Claims**

1. Device for measuring the average gas torque $C_{gas}$ produced by each combustion of the air-fuel mixture in a four-stroke internal combustion engine with p cylinders, linked to a magnetic sensor of instantaneous speed, mounted fixedly facing the flywheel of the engine, itself secured to a toothed ring, with N teeth, which delivers an alternating signal of frequency proportional to the speed of procession of the teeth of the ring, that is to say proportional to the instantaneous speed of the flywheel, **characterized in that** it is composed of:

   - first means (7) carrying out an FFT Fourier transform of the instantaneous angular speed $\omega(t)$ of the engine flywheel to deliver its harmonics ($\Omega_{np}$) of rank np over an engine cycle;
   - a dynamic model (8) of the engine-crankshaft system with torsion, linked to these first means (7), which makes it possible to calculate the harmonics ($C_{gas,np}$) of order np of the gas average torque as a function of the harmonics ($\Omega_{np}$) of the instantaneous angular speed;
   - second means (9) carrying out the correlation between the average value of the gas torque ($C_{gas,0}$) and its harmonics ($C_{gas,np}$).

2. Device for measuring the average gas torque according to Claim 1, **characterized in that** the dynamic model of the engine-crankshaft system integrates the torsion existing on account of the mass and stiffness of the crankshaft, by structural calculation in the form of a finite element model with $n_{EF}$ degrees of freedom, corresponding to the angular displacements and to the loads of the various elements of the crankshaft, i.e. the engine flywheel, the bearings, journals, arms, pulleys and crankpins which are the points of application of the connecting rods, the said model of the crankshaft being written, in the frequency domain, after inverting the inertia-damping-stiffness matrix, in the form:

$$[d\theta/dt] = [Js + B + K/s]^{-1} * [C]$$

   $[d\theta/dt]$ being a vector with $n_{EF}$ components representing the rotation speed of the elements of the crankshaft;
   $[C]$ being a vector with $n_{EF}$ components representing the torques applied to the crankshaft
   $K/s$ representing the torsion;
   $J$ representing the inertia of the crankshaft;
   $B$ being a damping term moderating the torsion;
   $s = i2\pi f$ (f = vibration frequency of the crankshaft),
   so that each harmonic ($C_{vil,pn}$) of the inertia torque of the crankshaft is expressed as a function of the harmonic ($\Omega_{pn}$) of the rotation speed of the crankshaft:

$$C_{vil,np} = \{p \ / \ \sum_{j=1}^{j=p} \alpha_j(s)\} * \Omega_{np}$$

3. Method of measuring the average gas torque implemented by the device according to Claims 1 and 2, whose first step consists in calculating the instantaneous angular speed $\omega(t)$ of the engine flywheel on the basis of a measurement of tooth duration (dt) of the toothed ring associated with the flywheel, that it inverts and multiplies by the angle corresponding to the passage of the tooth, **characterized in that** it comprises the following steps:

   - calculation of the FFT Fourier transform of this angular speed $\omega(t)$ to obtain therefrom its N/p harmonics ($\Omega_{np}$) of order np, over an engine cycle, i.e. two crankshaft revolutions, the fundamental harmonic for an engine with p cylinders being the harmonic ($\Omega p$) of order p;
   - calculation of the inertia torque ($C_{vil}$) of the crankshaft as a function of the speed of the engine flywheel on the basis of the dynamic model of the engine-crankshaft system which integrates the torsion, so that each harmonic

($C_{vil,pn}$) of the inertia torque of the crankshaft is expressed as a function of the harmonic ($\Omega_{pn}$) of the rotation speed of the crankshaft:

$$C_{vil,np} = \{p \;/\; \sum_{j=1}^{j=p} \alpha_j(s)\} * \Omega_{np}$$

j being an integer lying between 1 and p,
$\alpha_j(s)$ being calculated on the basis of the inertia-damping-stiffness matrix;
- calculation of the harmonics ($C_{gas,np}$) of the gas torque equal to the sum of the torque of the driven crankshaft and of the torque of the alternating masses according to the dynamic relation of the crankshaft in the frequency domain: $C_{gas,np} = C_{vil,np} + C_{ma,np}$
the harmonics $C_{ma,np}$ of the torque of the alternating masses being zero when $n \neq 1$, so that:

$$C_{gaz,np} = C_{vil,np} = \{p \;/\; \sum_{j=1}^{j=p} \alpha_j(s)\} * \Omega_{np} \;;$$

- correlation between the gas average torque ($C_{gas,0}$) and the significant harmonics of the signal:

$$(V_{cyl}/4\pi) \; * \; PMI_{np} \; \cos\Phi_{np}.$$

**4.** Method of measuring the average gas torque according to Claim 3, **characterized in that**, in the case of a Diesel engine with p cylinders, it establishes a correlation between the average gas torque ($C_{gas,0}$) and its harmonic ($C_{gas,2p}$) according to a linear relation:

$$(V_{cyl}/4\pi) \; * \; pmi_0 = a \; (V_{cyl}/4\pi) \; * \; (-2 \; PMI_{2p} * \cos\varphi_{2p}) + b$$

where a and b are coefficients obtained by mapping as a function to the first order of the ignition advance and possibly of the engine revs, this mapping being the result of a calibration on a type of engine.

**Patentansprüche**

**1.** Vorrichtung zur Messung des mittleren Gasmoments $Cg_{az}$, das von jeder Verbrennung des Luft-Kraftstoffgemischs in einem Viertaktverbrennungsmotor mit p Zylindern erzeugt wird, die mit einem Magnetfühler der Augenblicksgeschwindigkeit verbunden ist, der fest gegenüber dem Schwungrad des Motors angeordnet ist, das selbst fest mit einem Zahnkranz mit N Zähnen verbunden ist, der ein Wechselsignal mit einer Frequenz proportional zur Vorbeilaufgeschwindigkeit der Zähne des Kranzes, d.h. proportional zur Augenblicksgeschwindigkeit des Rads, liefert, **dadurch gekennzeichnet, dass** sie besteht aus:

- ersten Mitteln (7), die eine Fourier-Transformation FFT der augenblicklichen Winkelgeschwindigkeit $\omega(t)$ des Schwungrads ausführen, um ihre Harmonischen ($\Omega_{np}$) des Rangs np über einen Motorzyklus zu liefern;
- einem dynamischen Modell (8) des Motor-Kurbelwelle-Systems mit Torsion, das mit diesen ersten Mitteln (7) verbunden ist, das es erlaubt, die Harmonischen ($C_{gaz,np}$) der Ordnung np des mittleren Gasmoments in Abhängigkeit von den Harmonischen ($\Omega_{np}$) der augenblicklichen Winkelgeschwindigkeit zu berechnen;
- zweiten Mitteln (9), die die Korrelation zwischen dem mittleren Wert des Gasmoments ($C_{gaz,0}$) und seinen Harmonischen ($C_{gaz,np}$) herstellen.

**2.** Vorrichtung zur Messung des mittleren Gasmoments nach Anspruch 1, **dadurch gekennzeichnet, dass** das dynamische Modell des Motor-Kurbelwelle-Systems die Torsion einbezieht, die aufgrund der Masse und der Steifheit der Kurbelwelle vorhanden ist, durch Strukturberechnung in Form eines Modells mit endgültigen Elementen mit $n_{EF}$ Freiheitsgraden, entsprechend den Winkelverschiebungen und den Kräften der verschiedenen Elemente der Kurbelwelle, nämlich das Schwungrad, die Lager, Drehzapfen, Arme, Riemenscheiben und Kurbelzapfen, die die Anwendungspunkte der Schwingarme sind, wobei das Modell der Kurbelwelle sich auf dem Gebiet der Frequenz nach der Umkehr der Matrix aus Trägheit, Dämpfung und Steifheit in folgender Form schreibt:

$$[d\theta/dt] = [Js + B + K/s]^{-1} * [C]$$

wobei
$[d\theta/dt]$ ein Vektor mit $n_{EF}$ Komponenten ist, der die Drehgeschwindigkeit der Elemente der Kurbelwelle darstellt;
$[C]$ ein Vektor mit $n_{EF}$ Komponenten ist, der die an die Kurbelwelle angewendeten Drehmomente darstellt;
$K/s$ die Torsion darstellt;
$J$ die Trägheit der Kurbelwelle darstellt;
$B$ ein Dämpfungsterm ist, der die Torsion mäßigt;
$s = i2\pi f$ ($f$ = Schwingungsfrequenz der Kurbelwelle),
so dass jede Harmonische ($C_{vil,pn}$) des Trägheitsmoments der Kurbelwelle sich in Abhängigkeit von der Harmonischen ($\Omega_{pn}$) der Drehgeschwindigkeit der Kurbelwelle ausdrückt:

$$C_{vil,np} = \left\{ p \Big/ \sum_{j=1}^{j=p} \alpha_j(s) \right\} * \Omega_{np}$$

**3.** Verfahren zur Messung des mittleren Gasmoments, das von der Vorrichtung nach den Ansprüchen 1 und 2 angewendet wird, dessen erster Schritt darin besteht, die augenblickliche Winkelgeschwindigkeit $\omega(t)$ des Schwungrads ausgehend von einer Messung einer Zahndauer (dt) des dem Schwungrad zugeordneten Zahnkranzes zu berechnen, die es umkehrt und mit dem Winkel multipliziert, der dem Durchgang des Zahns entspricht, **dadurch gekennzeichnet, dass** es die folgenden Schritts aufweist:

- Berechnung der Fourier-Transformation FFT dieser Winkelgeschwindigkeit $\omega(t)$, um daraus ihre N/p Harmonischen ($\Omega_{np}$) der Ordnung np über einen Motorzyklus, d.h. zwei Kurbelwellenumdrehungen, zu erhalten, wobei die Grundharmonische für einen Motor mit p Zylindern die Harmonische ($\Omega_{np}$) der Ordnung p ist;
- Berechnung des Trägheitsmoments ($C_{vil}$) der Kurbelwelle in Abhängigkeit von der Geschwindigkeit des Schwungrads ausgehend von dem dynamischen Modell des Motor-Kurbelwelle-Systems, das die Torsion einbezieht, so dass jede Harmonische ($C_{vil,pn}$) des Trägheitsmoments der Kurbelwelle sich in Abhängigkeit von der Harmonischen ($\Omega_{pn}$) der Drehgeschwindigkeit der Kurbelwelle folgendermaßen ausdrückt:

$$C_{vil,np} = \left\{ p \Big/ \sum_{j=1}^{j=p} \alpha_j(s) \right\} * \Omega_{np}$$

wobei j eine ganze Zahl zwischen 1 und p ist, $\alpha_j(s)$ ausgehend von der Matrix aus Trägheit, Dämpfung und Steifheit berechnet wird;
- Berechnung der Harmonischen ($C_{gaz,np}$) des Gasmoments gleich der Summe des Drehmoments der angetriebenen Kurbelwelle und des Drehmoments der Wechselmassen gemäß der dynamischen Beziehung der Kurbelwelle auf dem Gebiet der Frequenz: $C_{gaz,np} = C_{vil,np} + C_{ma,np}$
wobei die Harmonischen $C_{ma,np}$ des Drehmoments der Wechselmassen Null sind, wenn gilt $n \neq 1$, so dass:

$$C_{gaz,np} = C_{vil,np} = \{p \; / \; \overset{j=p}{\underset{j=1}{\Sigma}} \; \alpha_j(s)\} \; * \; \Omega_{np}$$

- Korrelation zwischen dem mittleren Gasmoment ($C_{gaz,0}$) und den großen Harmonischen des Signals:

$$(V_{cyl}/4\pi) \; * \; PMI_{np} \; \cos\Phi_{np}.$$

4. Verfahren zur Messung des mittleren Gasmoments nach Anspruch 3, **dadurch gekennzeichnet, dass** es im Fall eines Dieselmotors mit p Zylindern eine Korrelation zwischen dem mittleren Gasmoment ($C_{gaz,0}$) und seiner Harmonischen ($C_{gaz,2p}$) gemäß einer linearen Beziehung herstellt:

$$(V_{cyl}/4\pi) \; * \; pmi_0 = a(V_{cyl}/4\pi) \; * \; (-2 \; PMI_{2p}*\cos\phi_{2p}) \; + \; b$$

wobei a und b Koeffizienten sind, die durch Kartographie in Abhängigkeit erstrangig von der Zündvorstellung und ggf. der Motordrehzahl erhalten werden, wobei diese Kartographie das Ergebnis einer Kalibrierung auf einen Motortyp ist.

3

6

5

2

+

4

Durées dent

FFT ∼7

1

$\Omega_{np}$

MODELE
VILEBREQUIN
TORSION($\alpha_j$) 8

$pmi_{np}$

CORRELATION
$pmi_o$ /$pmi_{np}$ 9

$pmi_o$

## RÉFÉRENCES CITÉES DANS LA DESCRIPTION

**Documents brevets cités dans la description**

- FR 9111273